# EUROPÄISCHE PATENTSCHRIFT

(11) **EP 2 142 329 B1**
(45) Veröffentlichungstag und Bekanntmachung des Hinweises auf die Patenterteilung: **16.01.2013**
(21) Anmeldenummer: 08735095.5
(22) Anmeldetag: 09.04.2008
(51) Int. Cl.: B23D 45/04, B27B 5/29

(54) **SÄGEEINRICHTUNG MIT VERSTELLHALTERUNG FÜR DAS SÄGEAGGREGAT**
SAWING DEVICE WITH ADJUSTABLE MOUNTING FOR THE SAWING ASSEMBLY
DISPOSITIF DE SCIAGE COMPRENANT UN DISPOSITIF DE FIXATION RÉGLABLE DESTINÉ À L'UNITÉ DE SCIAGE

(30) Priorität: 30.04.2007 DE 202007006291 U; 23.01.2008 DE 202008001007 U
(43) Veröffentlichungstag der Anmeldung: 13.01.2010
(73) Patentinhaber: Metabowerke GmbH, 72622 Nürtingen (DE)
(72) Erfinder: WINKLER, Stefan, 49757 Lahn (DE); ENGELMANN, Markus, 49716 Meppen (DE); BERGMANN, Laurenz, 49733 Haren/Ems (DE); VORWERK, Uwe, 49770 Herzlake (DE); HÖRMANN, Stefan, 49808 Lingen (DE)
(74) Vertreter: Lorenz, Markus
(86) Internationale Anmeldenummer: PCT/EP2008/002779
(87) Internationale Veröffentlichungsnummer: WO 2008/131849

(56) Entgegenhaltungen:
- EP-A- 1 777 046
- DE-A1- 3 119 573
- DE-A1- 19 832 984
- US-A- 3 994 192
- US-A1- 2004 060 412
- US-B1- 6 170 373

## Beschreibung

Die Erfindung betrifft eine Sägeeinrichtung mit den Merkmalen des Oberbegriffs von Anspruch 1. Eine solche Sägeeinrichtung ist aus DE 3119573 A1 bekannt.

Sägeeinrichtungen der in Rede stehenden Art sind im Grundsatz Tischsägeeinrichtungen, Kappsägeeinrichtungen, Kapp- und Gehrungssägen sowie kombinierte Kapp-, Gehrungs- und Zugsägen.

Die bekannte Sägeeinrichtung, von der die Erfindung ausgeht, ist eine Kapp-, Gehrungs- und Zugsägeeinrichtung, mit der Kappschnitte, Gehrungsschnitte und Schifterschnitte (Doppel-Gehrungs-Schnitte) ausgeführt werden können. Wegen der außerdem realisierten Zugfunktion können die ausgeführten Schnitte länger sein als es der wirksame Schnitthalbmesser des Sägeblattes vorgibt (DE-U-203 13 885).

** Daneben ist aus der DE 31 19 573 A1 eine Kappsäge bekannt, bei welcher ein Sägeblatt verrastet werden kann.

Bei einer Sägeeinrichtung der in Rede stehenden Art ist das Sägeaggregat, meist ausgerüstet mit einem Kreissägeblatt, in einer Arbeitsbewegung aus einer Ruhestellung in eine Arbeitsstellung und in einer Rückkehrbewegung aus der Arbeitsstellung in die Ruhestellung bewegbar. Bei einer Kappsägeeinrichtung der in Rede stehenden Art ist das Sägeaggregat mittels einer quer zur Sägerichtung verlaufenden Kapp-Schwenkachse schwenkbar gelagert und ist die Arbeitsbewegung/Rückkehrbewegung die Schwenkbewegung um eben diese Kapp-Schwenkachse. Der Träger ist dabei ein Drehteller in einem größeren Werkstückauflagetisch.

An dem Träger ist das Sägeaggregat mittels einer Verstellhalterung angeordnet. Diese Verstellhalterung hat mit der Ausführung der Arbeitsbewegung/Rückkehrbewegung zunächst nichts zu tun. Sie dient vielmehr dazu, das Sägeaggregat am Träger in seiner Relativlage zum Träger in verschiedenen Verstellpositionen anordnen zu können. Regelmäßig sind es mehrere definierte Verstellposition, die einrastend fixiert werden können.

Üblicherweise handelt es sich bei der Verstellhalterung um eine Schwenkhalterung, mit der das Sägeaggregat gegenüber dem Träger um eine in Sägerichtung verlaufende horizontale Schwenkachse schwenkbar ist.

Die Verstellhaltung erlaubt also eine Neigungsverstellung des Sägeaggregates gegenüber der Werkstückauflagefläche, so daß entsprechende Gehrungsschnitte mit durch die Verstellhalterung vorgegebenem Gehrungswinkel ausgeführt werden können. Typische Gehrungswinkel wie 45° oder 30°, neben der Grundstellung bei ± 0°, sind durch Bolzen oder Hebel, die von Hand betätigt werden, einrastend fixierbar. Häufig ist aber auch nur eine stufenlose Verstellung und eine Fixierung mittels einer Spannschraube mit Spannknebel vorgesehen.

Grundsätzlich ist es auch bekannt, nur eine einzige einrastend fixierte Verstellposition vorzusehen. Diese ist dann im Regelfall die Grundstellung des Sägeaggregats mit dem Neigungswinkel ± 0°.

Ist eine einrastende Fixierung bestimmter definierter Verstellpositionen vorgesehen, so ist es meist so, daß die einrastende Fixierung unter Federbelastung erfolgt, während sie durch eine manuelle Handhabung, beispielsweise das Rückziehen eines federbelasteten Bolzens lösbar ist.

Im Stand der Technik, von dem die Erfindung ausgeht, erfolgt die manuelle Handhabung zum Lösen der einrastenden Fixierung regelmäßig hinten an der Sägeeinrichtung, während die andere Hand der Bedienungsperson das Sägeaggregat am Betätigungshandgriff festhält. Die manuelle Handhabung erfordert also den Einsatz beider Hände und mehrere aufeinander folgende Handhabungsschritte. Da man nach hinten an das Sägeaggregat greifen muß, wenn es sich bei der Verstellhalterung wie meistens um eine Schwenkhalterung zur Neigungsverstellung handelt, besteht immer auch ein gewisses Verletzungsrisiko, weil man unwillkürlich dazu tendiert, unter dem Sägeblatt hindurch zu greifen.

Der Lehre der vorliegenden Erfindung liegt das Problem zu Grunde, die bekannte, zuvor erläuterte Sägeeinrichtung hinsichtlich der Handhabung der einrastenden Fixierung zu verbessern.

Die zuvor aufgezeigte Aufgabe ist bei einer Sägeeinrichtung mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Kern der Lehre ist die Überlegung, daß die Rückkehrbewegung des Sägeaggregates selbst dazu ausgenutzt wird, die für das Lösen der Fixierung erforderliche manuelle Handhabung ergonomisch günstig mit auszuführen. Vorgesehen ist, daß die Rückkehrbewegung, die an sich mittels eines Anschlags in der Ruhestellung endet, in einem Überhub ein kleines Wegstück fortgesetzt werden kann. Der erfindungsgemäß vorgesehene Überhub wird erfindungsgemäß dazu genutzt, die einrastende Fixierung zu lösen. Durch bewußtes Bewegen des Sägeaggregates über die Ruhestellung hinaus, insbesondere gegen einen spürbaren Widerstand, läßt sich somit die einrastende Fixierung lösen.

Im bevorzugten Beispiel einer Schwenkhalterung für die Neigungsverstellung des Sägeaggregates wird man das Sägeaggregat nach Ausführen des Überhubs in der dann erreichten Stellung festhalten und bei gelöster Fixierung das Sägeaggregat seitlich in die Nähe der neuen, gewünschten Neigung verstellen. Jetzt führt man das Sägeaggregat wieder in die normale Ruhestellung zurück und die Fixierung rastet wieder ein, spätestens wenn man das Sägeaggregat noch ein klein wenig in der Neigung verstellt, bis die nächste definierte Verstellposition erreicht ist.

Insbesondere empfiehlt es sich, daß zur Realisierung der einrastenden Fixierung an der Verstellhalterung ein Rastelement, insbesondere ein Rasthebel oder Rastbolzen, angeordnet ist, das in Einrastrichtung federbelastet und durch die manuelle Handhabung entgegen der Federbelastung aushebbar ist.

Weitere Unteransprüche erläutern die Kraftübertragung vom Sägeaggregat auf das Rastelement.

Bei dem besonders bevorzugten Beispiel einer erfindungsmäßen Sägeeinrichtung handelt es sich um eine Kappsägeeinrichtung mit Gehrungssägefunktion, also um eine Kapp- und Gehrungssäge, bei der das Sägeaggregat oberhalb der Werkstückauflagefläche angeordnet ist.

In einer besonders bevorzugten Ausführung ist zusätzlich eine Zugführung vorgesehen, so daß das Sägeaggregat an der Verstellhalterung in Sägerichtung verschiebbar gelagert ist, um die Schnittlänge des Sägeschnittes zu vergrößern.

Für die erfindungsgemäß realisierte manuelle Handhabung kann sowohl die Rückkehrbewegung um die Kapp-Schwenkachse genutzt werden als auch die Rückkehrbewegung in der Verschiebebewegung mittels der Zugführung. Letzteres ist auch realisierbar, ohne daß eine Kapp-Schwenkachse vorhanden ist, also bei einer Radialarm-Zugsäge (EP-B-0 133 055).

Weiter bevorzugte Ausgestaltungen gemäß den Unteransprüchen befassen sich mit den Kraftsübertragungsfunktionen bei verschiedenen Konstellationen.

Bereits zuvor ist darauf hingewiesen worden, daß die Rückkehrbewegung des Sägeaggregates im Überhub vorzugsweise gegen einen spürbaren Widerstand erfolgen sollte, um den Überhub für die Bedienungsperson merkbar zu machen. Nach bevorzugter Lehre der Erfindung ist dazu vorgesehen, daß die Ruhestellung des Sägeaggregates durch einen Ruheanschlag definiert ist, der zum Ausführen des Überhubs überfahrbar oder ausschaltbar ist. Jenseits der Ruhestellung ist dann der Überhub zweckmäßigerweise selbst wieder durch einen festen Überhubanschlag begrenzt.

Ist der Ruheanschlag zum Ausführen des Überhubs lediglich überfahrbar, beispielsweise weil er unter Federvorspannung steht, aber bei hinreichender Kraftausbringung entgegen der Federvorspannung ausweicht, so bedarf es keiner weiteren konstruktiven Maßnahme. Für ein positives Ausschalten des Ruheanschlags jedoch ist zweckmäßigerweise eine manuelle Ausschalthandhabung erforderlich. Diese sieht zweckmäßigerweise vor, daß am Betätigungshandgriff ein Betätigungselement zum Ausführen der Ausschalthandhabung vorgesehen und über eine Betätigungsverbindung mit dem Ruheanschlag gekuppelt ist.

Am Betätigungshandgriff ist also beispielsweise ein Drucktaster als Betätigungselement vorgesehen, der gedrückt wird, um die Rückkehrbewegung über die Ruhestellung hinaus im Überhub überhaupt erst fortsetzen zu können. Durch Betätigen des Betätigungselements wird beispielsweise ein Ruheanschlag ausgeschwenkt und unwirksam gemacht. Das kann mittels einer mechanischen Kraftwirkungskette passieren, insbesondere in Form eines Gestänges, einer Seilzugmechanik oder einer Bowdenzugmechanik.

Eine andere Möglichkeit besteht darin, eine drahtlose Steuerungsverbindung zu verwirklichen, insbesondere eine elektrische Steuerungsverbindung zu einem elektrisch oder elektromagnetisch arbeitenden Verstellelement für den Ruheanschlag. Entsprechend sind auch pneumatische oder hydraulische Steuerungsverbindungen denkbar.

Die zuvor erläuterte zweistufige Betätigung ist aus sicherheitstechnischen Gründen besonders interessant, während die eingangs erläuterte einstufige Betätigung konstruktiv besonders einfach ist.

Im folgenden wird die Erfindung anhand einer lediglich Ausführungsbeispiele darstellenden Zeichnung näher erläutert. Bei der Erläuterung der Zeichnungen werden auch weitere Vorteile und Besonderheiten der Erfindung im Detail erläutert. In der Zeichnung zeigt
- Fig. 1: in schematischer Darstellung ein erstes Ausführungsbeispiel einer erfindungsgemäßen Sägeeinrichtung,
- Fig. 2: die Sägeeinrichtung aus Fig. 1, zusätzlich ausgestattet mit einem Betätigungselement am Betätigungshandgriff,
- Fig. 3: ein zweites, abgewandeltes Ausführungsbeispiel einer erfindungsmäßen Sägeeinrichtung in einer Fig. 1 entsprechenden Darstellung.

Gegenstand der Erfindung ist eine Sägeeinrichtung und insbesondere, wie hier dargestellt, eine Kapp-, Gehrungs- und Zugsäge.

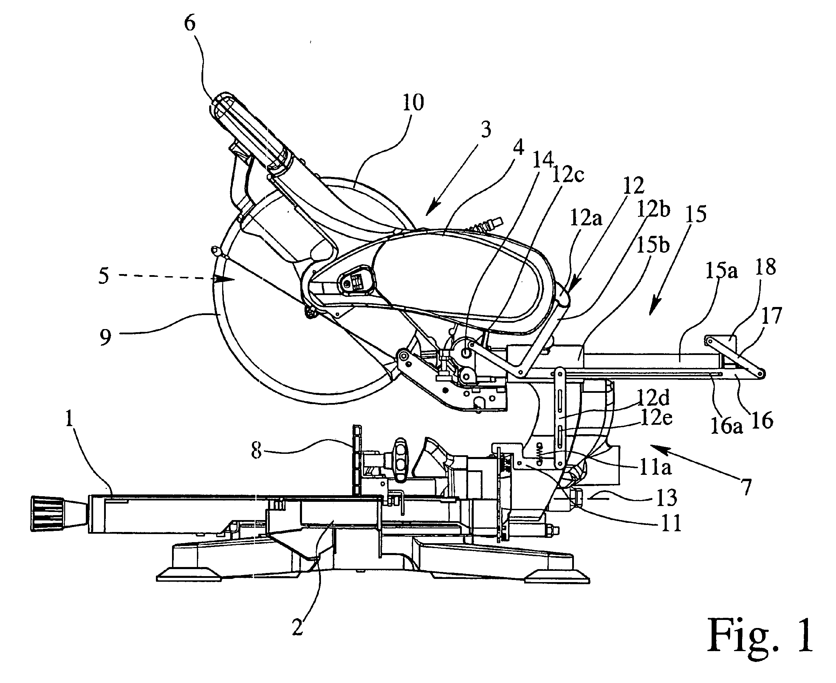

Das in Fig. 1 dargestellte Ausführungsbeispiel einer solchen Sägeeinrichtung zeigt zunächst einen eine Werkstückauflagefläche 1 bildenden Träger 2 und ein Sägeaggregat 3 mit einem Antriebsmotor 4 und einem Sägeblatt 5 sowie einem Betätigungshandgriff 6. Das Sägeaggregat 3 ist am Träger 2 mittels einer Verstellhalterung 7 angeordnet. Mittels dieser Verstellhalterung 7 ist das Sägeaggregat 3 in seiner Relativlage zum Träger 2 verstellbar und in mindestens einer definierten Verstellposition, vorzugsweise in mehreren definierten Verstellpositionen, einrastend fixierbar.

Im dargestellten Ausführungsbeispiel ist vorgesehen, daß die Normalstellung des Sägeaggregates mit dem Gehrungswinkel ± 0° ebenso einrastend fixierbar ist wie die Verstellpositionen + 45° und -45°. Das wird nachfolgend noch genauer erläutert.

An der Werkstückauflagefläche 1 befindet sich eine Anschlagschiene 8. Das Sägeblatt 5 ist im in Fig. 1 dargestellten Ausführungsbeispiel von einer Pendelschutzhaube 9 verdeckt, die eine feststehende Schutzhaube 10 an der Unterseite komplettiert, so daß in der dargestellten angehobenen Ruhestellung des Sägeaggregates 3 das Sägeblatt 5 vollständig gegen Berührung geschützt ist.

Die einrastende Fixierung an der Verstellhalterung 7 ist durch eine manuelle Handhabung lösbar, so daß die Relativlage des Sägeaggregates 3 zum Träger 2 geändert werden kann. Im einzelnen wird das nachfolgend näher erläutert.

Das Sägeaggregat 3 ist gegenüber der Verstellhalterung 7 in einer Arbeitsbewegung aus der in Fig. 1 dargestellten Ruhestellung in eine Arbeitsstellung und in einer Rückkehrbewegung aus der Arbeitsstellung in die Ruhestellung bewegbar.

Die Lehre der vorliegenden Erfindung ist darauf gerichtet, daß durch die zuvor erwähnte manuelle Handhabung (zum Lösen der einrastenden Fixierung) die Rückkehrbewegung des Sägeaggregates 3 über die in Fig. 1 dargestellte Ruhestellung hinaus in einem Überhub ein kleines Wegstück fortsetzbar und durch die Bewegung des Sägeaggregates 3 im Überhub die einrastende Fixierung dann lösbar ist. Das bedeutet, daß für das Lösen der Fixierung nicht zusätzlich zum Halten des Sägeaggregates 3 am Betätigungshandgriff 6 eine weitere Handhabung erforderlich ist. Vielmehr reicht erfindungsgemäß die fortgesetzte Handhabung am Betätigungshandgriff 6 dazu aus, die Fixierung zu lösen. Dazu ist ein weiterer Weg über die Ruhestellung hinaus vorgesehen, der Überhub, mit dem diese Betätigungswirkung erzielbar ist.

Das Ausführungsbeispiel gemäß Fig. 1 zeigt, daß hier zur Realisierung der einrastenden Fixierung an der Verstellhalterung 7 ein Rastelement 11, im dargestellten Ausführungsbeispiel ein Rasthebel, angeordnet ist. Dieses Rastelement 11 ist in Einrastrichtung durch eine Rückholfeder 11a federbelastet und ist durch die manuelle Handhabung entgegen dieser Federbelastung aus der Gegenraste aushebbar. Bei dem in Fig. 1 dargestellten und bevorzugten Ausführungsbeispiel ist die Verstellhalterung 7 eine Schwenkhalterung, mit der das Sägeaggregat 3 gegenüber dem Träger 2 um eine in Sägerichtung verlaufende, horizontale Neigungs-Schwenkachse 13 schwenkbar ist. Durch die Neigung um die horizontale Neigungs-Schwenkachse 13 läßt sich der Gehrungswinkel des auszuführenden Gehrungsschnittes einstellen.

Grundsätzlich ist es auch möglich, daß die mittels der Verstellhalterung 7 ausgeführte Bewegung eine andere ist als die seitliche Neigungsbewegung. Die seitliche Neigungsbewegung ist aber der bevorzugte Anwendungsfall für die erfindungsgemäße Lehre.

Um nun die erweiterte Rückkehrbewegung des Sägeaggregates 3 über die Ruhestellung hinaus im Überhub in eine Bewegung des Rastelements 11 umzusetzen, ist gemäß Fig. 1 vorgesehen, daß zwischen dem Sägeaggregat 3 und dem Rastelement 11 eine Kraftübertragungskette 12 vorgesehen ist, die zumindest in der Ruhestellung und im Überhub des Sägeaggregates 3 wirksam ist. Im in Fig. 1 dargestellten Ausführungsbeispiel handelt es sich bei dieser Kraftübertragungskette 12 um eine Betätigungsnase 12a am rückwärtigen Ende des Antriebsmotors 4, die auf einen Winkelhebel 12b stützend wirkt, der am feststehenden Teil der Verstellhalterung 7 an einem Schwenklager 12c schwenkbar angelenkt ist. Eine Verbindungsstange 12d wirkt auf das an der Verstellhalterung 7 schwenkbar angelenkte Rastelement 11.

Das dargestellte und bevorzugte Ausführungsbeispiel zeigt das Sägeaggregat 3 oberhalb der Werkstückaufiagefiäche 1, wobei das Sägeaggregat 3 an der Verstellhalterung 7 mittels einer horizontalen, quer zur Sägerichtung verlaufenden Kapp-Schwenkachse 14 schwenkbar gelagert ist. Dadurch, daß die Betätigungsnase 12a auf den Winkelhebel 12b nur aufstützt, löst sich die Betätigungsnase 12a dann, wenn das Sägeaggregat 3 um die Kapp-Schwenkachse 14 nach unten in die Arbeitsstellung geschwenkt wird.

Das Sägeaggregat 3 wird jedoch in Richtung der Ruhestellung kraftunterstützt, insbesondere federkraftunterstützt bewegt. Bei Rückkehr in die Ruhestellung trifft zunächst die Betätigungsnase 12a auf den oberen Rand des Winkelhebels 12b. Dadurch ist die Ruhestellung des Sägeaggregates 3 erreicht. Wird das Sägeaggregat 3 jedoch am Betätigungshandgriff 6 über diese Ruhestellung hinaus in einem Überhub ein kleines Wegstück weiter nach oben angehoben, so wird entsprechend die Betätigungsnase 12a ein wenig nach unten bewegt. Der Winkelhebel 12b schwenkt um das Schwenklager 12c und bewegt damit auch die Verbindungsstange 12d nach unten. Diese schwenkt das Z-förmige Rastelement 11, so daß dieses entgegen der vor den Rückholfeder 11a aufgebrachten Federbelastung ausgehoben wird. Nun kann das Sägeaggregat 3 gegenüber dem Träger 2 um die Neigungs-Schwenkachse 13 in die neue, gewünschte Verstellposition geschwenkt werden. Das Rastelement 11 rastet bei Entlastung des Betätigungshandgriffs 6 unter Wirkung der Rückholfeder 11a an der gewünschten Stelle wieder ein.

Bei dem hier dargestellten und bevorzugten Ausführungsbeispiel ist also die Arbeitsbewegung/Rückkehrbewegung die Schwenkbewegung um die Kapp-Schwenkachse 14.

Die in Fig. 1, 2 und 3 dargestellten und insoweit bevorzugten Ausführungsbeispiele zeigen im übrigen eine zusätzliche Ausgestaltung der dargestellten Sägeeinrichtung dergestalt, daß das Sägeaggregat 3 an der Verstellhalterung 7 nicht nur mittels der Kapp-Schwenkachse 14 schwenkbar gelagert ist, sondern zusätzlich auch noch mittels einer in Sägerichtung verlaufenden Zugführung 15 verschiebbar gelagert ist, mit Zugstangen 15a und Führungen 15b.

Bei einer Radialarmsäge gibt es keine Kapp-Schwenkachse, sondern dort ist das Sägeaggregat nur mittels der Zugführung in Sägerichtung verschiebbar gelagert. Auch für eine solche Sägeeinrichtung ist die Lehre der vorliegenden Erfindung anwendbar. Dort ist dann die Arbeitsbewegung/Rückkehrbewegung, die für die genannte manuelle Handhabung genutzt wird, die Verschiebebewegung mittels der Zugführung.

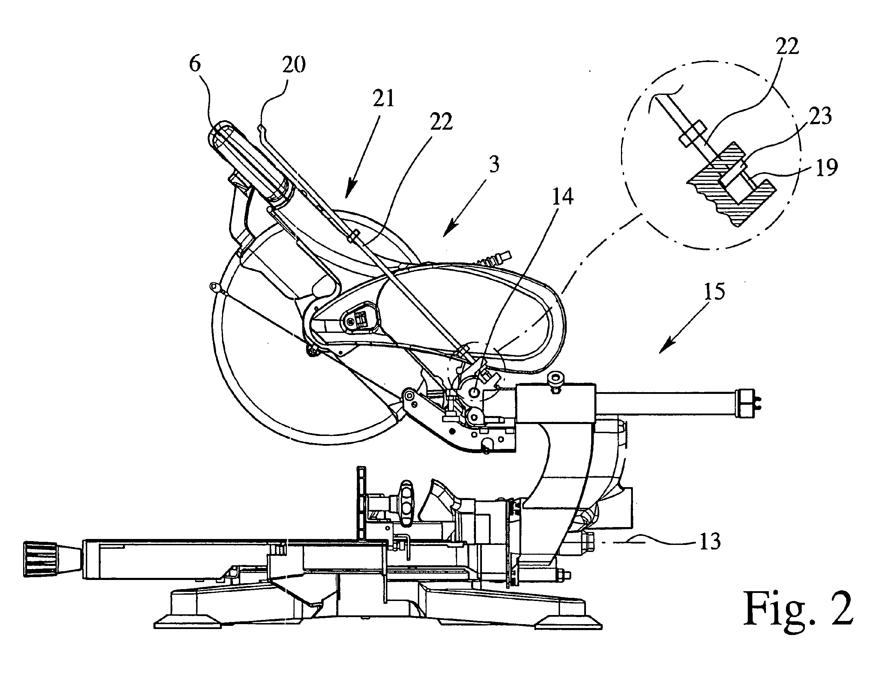

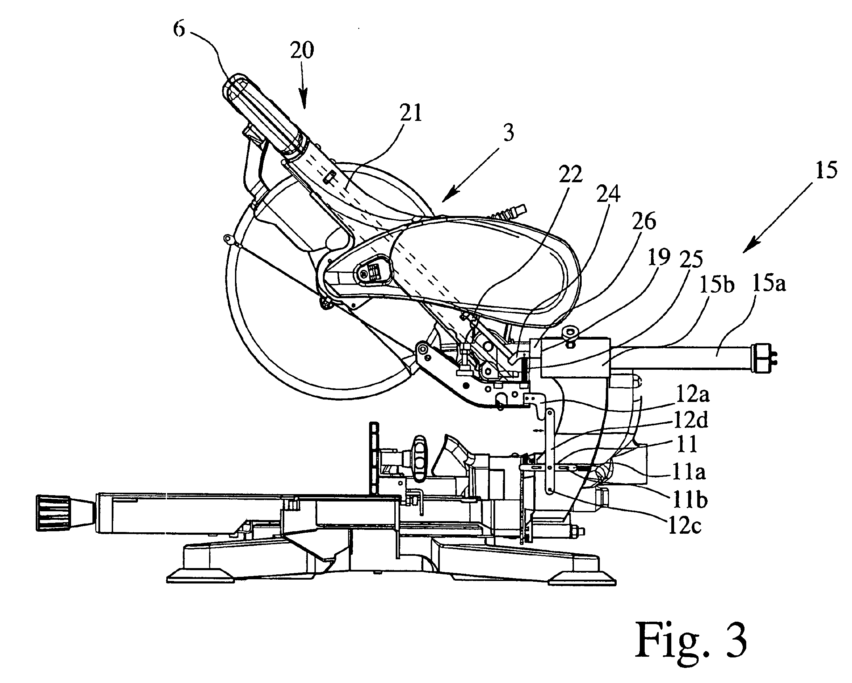

Die Arbeitsbewegung/Rückkehrbewegung, die für die manuelle Handhabung ausgenutzt wird, ist in Fig. 1 und 2 die Schwenkbewegung um die Kapp-Schwenkachse 14. Demgegenüber hat das in Fig. 3 dargestellte Ausführungsbeispiel eine Konstruktion, bei der die Arbeitsbewegung/Rückkehrbewegung die Verschiebebewegung mittels der Zuführung 15 ist.

Das in Fig. 1 dargestellte und insoweit bevorzugte Ausführungsbeispiel zeigt hinsichtlich der Kraftübertragungskette 12 eine besondere konstruktive Ausgestaltung, durch die gewährleistet ist, daß die Kraftübertragung vom Sägeaggregat 3 auf das Rastelement 11 im Überhub in jeder Verschiebestellung des Sägeaggregates 3 (die mittels der Zugführung 15 realisiert werden kann) gewährleistet ist.

Dazu ist im dargestellten und bevorzugten Ausführungsbeispiel vorgesehen, daß die Kraftübertragungskette 12 hier noch zusätzlich eine parallel zur Zugführung 15, genauer gesagt zu den Zugstangen 15a der Zugführung 15, angeordnete Verschiebekulisse 16 aufweist. Die Verschiebekulisse 16 ist am Winkel des Winkelhebels 12b schwenkbar angelenkt und am rückwärtigen Ende der Zugstangen 15a mittels eines Parallelogrammhebels 17 an einem Tragwinkel 18 aufgehängt. Die Verbindungsstange 12d steht mit einem Langloch 16a in der Verschiebekulisse 16 in Eingriff. Die Verbindungsstange 12d selbst ist mittels Langlöchern 12e, die übereinander angeordnet sind, an der Verstellhalterung 7 nur in vertikaler Richtung verschiebbar gelagert. Dadurch, daß das obere Ende der Verbindungsstange 12d im Langloch 16a der Verschiebekulisse 16 parallel zu den Zugstangen 15a laufen kann, kommt es auf die Position des Sägeaggregates 3 in Zugrichtung nicht an. In jeder Position kann über die Parallelogrammanordnung der Verschiebekulisse 16 die manuelle Handhabung des Sägeaggregates 3 im Überhub auf das Rastelement 11 übertragen werden.

Fig. 3 zeigt eine alternative Konstruktion mit einer Betätigungsnase 12a am feststehenden Teil der Verstellhalterung 7. Die Betätigungsnase 12a schwenkt nicht mit, wenn das Sägeaggregat 3 aus der in Fig. 3 dargestellten Ruhestellung nach unten in die Arbeitsstellung geschwenkt wird. Die Bezugszeichen 1 bis 10 aus Fig. 1 gelten auch für Fig. 3.

In dem in Fig. 3 dargestellten Ausführungsbeispiel ist die Verbindungsstange 12d unten am Schwenklager 12c an der Verstellhalterung angebracht. Der das Rastelement 11 bildende Rasthebel liegt horizontal und ist mit der Verbindungsstange 12d durch ein Schwenklager verbunden. Das Rastelement 11 wird von der Rückholfeder 11a in Fig. 3 nach links federbelastet. Durch das Langloch 11b wird das Rastelement 11 horizontal geführt.

Wird das Sägeaggregat 3 aus der in Fig. 3 dargestellten Ruhestellung im Überhub noch etwas weiter nach rechts verschoben, so drückt die Betätigungsnase 12a die Verbindungsstange 12d nach rechts und das Rastelement 11 wird ebenfalls nach rechts verschoben. Dadurch gerät es außer Eingriff mit dem Gegenelement am Träger 2 und das Sägeaggregat 3 kann gegenüber dem Träger 2 um die Neigungs-Schwenkachse 13 geschwenkt werden. Läßt man den Betätigungshandgriff 6 wieder los, so kehrt das Sägeaggregat 3 wieder in die Ruhestellung zurück und das Rastelement 11 rastet wieder ein, nun in der neuen, gewünschten Verstellposition.

Bislang sind die beiden Ausführungsbeispiele einer erfindungsgemäßen Sägeeinrichtung so beschrieben worden, daß lediglich das bewußte Bewegen des Sägeaggregates über die Ruhestellung hinaus, insbesondere gegen einen spürbaren Widerstand, die einrastenden Fixierung löst.

Die beiden dargestellten Ausführungsbeispiele sind jedoch noch mit einer zusätzlichen Sicherheitseinrichtung ausgerüstet. Diese Sicherheitseinrichtung dient dazu, ein versehentliches Lösen der einrastenden Fixierung sicher zu verhindern. Dazu ist in Fig. 2 und Fig. 3 eingezeichnet, daß die Ruhestellung des Sägeaggregates 3 durch einen Ruheanschlag 19 definiert ist, der zum Ausführen des Überhubs ausschaltbar ist (siehe den Ausschnitt in Fig. 2). Die Bezugszeichen 1 bis 10 aus Fig. 1 gelten auch für Fig. 2.

Anders als bei der bisher beschriebenen Konstruktion ist also der Ruheanschlag 19 nicht nur gegen einen gewissen Widerstand überfahrbar, sondern er ist positiv vorhanden und verhindert eine Bewegung des Sägeaggregates 3 im Überhub solange bis er ausgeschaltet worden ist. Dieses Ausschalten des Ruheanschlags 19 erfolgt erfindungsgemäß durch eine manuelle Ausschalthandhabung.

Die in den Fig. 2 und 3 dargestellten Ausführungsbeispiele zeigen eine mechanische Lösung für dieses Ausschalten. In beiden Ausführungsbeispielen ist, nicht beschränkend zu verstehen, vorgesehen, daß am Betätigungshandgriff 6 ein Betätigungselement 20, beispielsweise ein Drucktaster oder Druckknopf zum Ausführen dieser Ausschalthandhabung vorgesehen ist. Dieses Betätigungselement 20 ist über eine Betätigungsverbindung 21 mit dem Ruheanschlag 19 gekuppelt. In den dargestellten Ausführungsbeispielen ist die Betätigungsverbindung 21 als mechanische Kraftwirkungskette ausgeführt. In beiden dargestellten Ausführungsbeispielen handelt es sich um ein Gestänge. Es könnten aber auch eine Seilzugmechanik oder eine Bowdenzugmechanik vorgesehen sein. Man kann natürlich verschiedene Typen der Kraftübertragung auch miteinander kombinieren.

Bei dem in Fig. 2 dargestellten Ausführungsbeispiel (siehe den Ausschnitt) weist die Betätigungsverbindung 21 eine langgestreckte Stange 22 auf, die mittels des Betätigungselements 20 um ihre Längsachse gedreht wird. Dadurch wird ein am rechten Ende der Betätigungsstange 22 befindlicher Exzenter 23 seitlich ausgeschwenkt, so daß der Ruheanschlag 19 freigegeben wird. Nun kann man das Sägeaggregat 3 an dem Betätigungshandgriff 6 ein wenig höher anheben und der in Fig. 1 dargestellte Betätigungseffekt für das Rastelement 11 tritt ein.

Beim Ausführungsbeispiel von Fig. 3 ist die Konstruktion der Betätigungsverbindung 21 etwas anders. Hier wird eine Stange 22 in Längsrichtung verschoben und trifft rechts unten am Sägeaggregat 3 auf einen am feststehenden Teil der Verstellhalterung 7 angeordneten Kipphebel 24. Dieser ist im Uhrzeigersinn mittels einer Zugfeder 25 federbelastet und trägt an seinem rechten Ende einen teilkreisförmigen Bügel 26, der sich satt um die entsprechende Zugstange 15a der Zugführung 15 legt. Das ist die in Fig. 3 dargestellte Ruhestellung. Wird durch Drücken auf das Betätigungselement 20, hier ein Drucktaster, die Stange 22 in Fig. 3 nach rechts unten verschoben, so wird der Kipphebel 24 entgegen dem Uhrzeigersinn geschwenkt und der Bügel 26 wird von der Zugstange 15a gelost, Das Sägeaggregat 3 kann mittels der Zugführung 15 weiter nach rechts im Überhub verschoben werden. Dadurch erfolgt über die Betätigungsnase 12a die Betätigung des Rastelements 11.

Während im voranstehend erläuterten Ausführungsbeispiel die Betätigungsverbindung 21 als mechanische Kraftwirkungskette ausgeführt ist, kann man sich durchaus vorstellen, daß die Betätigungsverbindung 21 als elektrische, pneumatische oder hydraulische Steuerungsverbindung ausgeführt sein kann.

Im übrigen gilt, daß auch statt der Kraftwirkungskette 12 zur Betätigung des Rastelements 11 eine elektrische, pneumatische oder hydraulische Steuerungsverbindung vorgesehen sein kann, die dann gewissermaßen drahtlos für das Betätigen des Rastelements 11 sorgt.

Realisiert man eine elektrische Steuerungsverbindung, so kann man beispielsweise dem Rastelement 11 ein elektomagnetisches Antriebsmittel, beispielsweise ein Solenoid zuordnen, das ein elektrisches Signal umsetzt, das seinerseits durch eine Bewegung des Sägeaggregates 3 über die Ruhestellung hinaus im Überhub ausgelöst worden ist. Derartige Steuerungstechniken sind aus dem Stand der Technik in vielerlei Hinsicht bekannt. Bevorzugt ist allerdings eine mechanische Konstruktion, die unter den rauhen Baustellungsbedingungen weniger fehleranfällig ist.

Den beiden dargestellten Ausführungsbeispielen ist im übrigen gemeinsam, daß der Überhub durch einen festen Überhubanschlag begrenzt ist.

## Patentansprüche

1. Sägeeinrichtung
mit einem eine Werkstückauflagefläche (1) bildenden Träger (2) und mit einem Sägeaggregat (3) mit einem Antriebsmotor (4), einem vom Antriebsmotor (4) angetriebenen Sägeblatt (5) und einem Betätigungshandgriff (6),
wobei das Sägeaggregat (3) am Träger (2) mittels einer Verstellhalterung (7) in seiner Relativlage zum Träger (2) verstellbar und in mindestens einer definierten Verstellposition, vorzugsweise in mehreren definierten Verstellpositionen, einrastend fixierbar angeordnet ist,
wobei die einrastende Fixierung durch eine manuelle Handhabung lösbar ist und wobei das Sägeaggregat (3) gegenüber der Verstellhalterung (7) in einer Arbeitsbewegung aus einer Ruhestellung in eine Arbeitsstellung und in einer kraftunterstützten Rückkehrbewegung aus der Arbeitsstellung in die Ruhestellung bewegbar ist,
**dadurch gekennzeichnet,**
**daß** durch die genannte manuelle Handhabung die Rückkehrbewegung des Sägeaggregates (3) über die Ruhestellung hinaus in einem Überhub ein kleines Wegstück fortsetzbar und durch die Bewegung des Sägeaggregates (3) im Überhub die einrastende Fixierung lösbar ist.

2. Sägeeinrichtung nach Anspruch 1, **dadurch gekennzeichnet,**
**daß** zur Realisierung der einrastenden Fixierung an der Verstellhalterung (7) ein Rastelement (11), insbesondere ein Rasthebel oder Rastbolzen, angeordnet ist, das in Einrastrichtung federbelastet und durch die manuelle Handhabung entgegen der Federbelastung aushebbar ist,
wobei, vorzugsweise, zwischen dem Sägeaggregat (3) und dem Rastelement (11) eine zumindest in der Ruhestellung und im Überhub des Sägeaggregates (3) wirksame Kraftübertragungskette (12) vorgesehen ist.

3. Sägeeinrichtung nach Anspruch 1 oder 2, **dadurch gekennzeichnet, daß** die Verstellhalterung (7) eine Schwenkhalterung ist, mit der das Sägeaggregat (3) gegenüber dem Träger (2) um eine in Sägerichtung verlaufende horizontale Neigungs-Schwenkachse (13) schwenkbar ist.

4. Sägeeinrichtung nach einem der Ansprüche 1 bis 3, **dadurch gekennzeichnet,**
**daß** das Sägeaggregat (3) oberhalb der Werkstückauflagefläche (1) angeordnet ist.

5. Sägeeinrichtung nach Anspruch 4, **dadurch gekennzeichnet,**
**daß** das Sägeaggregat (3) an der Verstellhalterung (7) mittels einer horizontalen, quer zur Sägerichtung verlaufenden Kapp-Schwenkachse (14) schwenkbar gelagert ist,
wobei, vorzugsweise, die Arbeitsbewegung/Rückkehrbewegung die Schwenkbewegung um die Kapp-Schwenkachse (14) ist.

6. Sägeeinrichtung nach Anspruch 4 oder 5, **dadurch gekennzeichnet,**
**daß** das Sägeggregat (3) an der Verstellhalterung (7) mittels einer in Sägerichtung verlaufenden Zugführung (15) in Sägerichtung verschiebbar gelagert ist.

7. Sägeeinrichtung nach Anspruch 6, **dadurch gekennzeichnet,**
**daß** die Arbeitsbewegung/Rückkehrbewegung die Verschiebebewegung mittels der Zugführung (15) ist.

8. Sägeeinrichtung nach den Ansprüchen 5 und 6, **dadurch gekennzeichnet,**
**daß** die Kraftübertragung vom Sägeaggregat (3) auf das Rastelement (11) im Überhub in jeder Verschiebestellung des Sägeaggregates (3) gewährleistet ist, wobei, vorzugsweise, dazu die Kraftübertragungskette (12) eine parallel zur Zugführung (15) angeordnete Verschiebekulisse (16) aufweist.

9. Sägeeinrichtung nach einem der Ansprüche 1 bis 8, **dadurch gekennzeichnet,**
**daß** die Ruhestellung des Sägeaggregates (3) durch einen Ruheanschlag (19) definiert ist, der zum Ausführen des Überhubs überfahrbar oder ausschaltbar ist.

10. Sägeeinrichtung nach Anspruch 9, **dadurch gekennzeichnet,**
**daß** das Ausschalten des Ruheanschlags (19) durch eine manuelle Ausschalthandhabung erfolgt.

11. Sägeeinrichtung nach Anspruch 10, **dadurch gekennzeichnet,**
**daß** am Betätigungshandgriff (6) ein Betätigungselement (20) zum Ausführen der Ausschalthandhabung vorgesehen und über eine Betätigungsverbindung (21) mit dem Ruheanschlag (19) gekuppelt ist.

12. Sägeeinrichtung nach Anspruch 11, **dadurch gekennzeichnet,**
**daß** die Betätigungsverbindung (21) als mechanische Kraftwirkungskette, insbesondere als Gestänge, Seilzugmechanik oder Bowdenzugmechanik, ausgeführt ist.

13. Sägeeinrichtung nach Anspruch 11, **dadurch gekennzeichnet,**
**daß** die Betätigungsverbindung (21) als elektrische, pneumatische oder hydraulische Steuerungsverbindung ausgeführt ist.

14. Sägeeinrichtung nach einem der Ansprüche 1 bis 13, **dadurch gekennzeichnet, daß** der Überhub durch einen festen Überhubanschlag begrenzt ist.

15. Sägeeinrichtung nach einem der Ansprüche 1 bis 14, **dadurch gekennzeichnet, daß** zur Betätigung des Rastelements (11) statt einer mechanischen Kraftübertragungskette (12) eine elektrische, pneumatische oder hydraulische Steuerungsverbindung vorgesehen ist.

## Claims

1. Sawing device
with a carrier (2) forming a workpiece-supporting surface (1) and with a sawing unit (3) with a driving motor (4), a saw blade (5) driven by said driving motor (4) and an actuating handle (6),
wherein the sawing unit (3) is arranged on the carrier (2) so as to be adjustable by means of an adjusting mounting (7) in its position relative to said carrier (2) and so as to be capable of being immobilised in a manner latching-in in at least one defined position of adjustment, preferably in a number of defined positions of adjustment,
wherein the latching-in immobilisation can be set aside by a manual operation and wherein the sawing unit (3) can be moved in relation to the adjusting mounting (7), in a working movement, out of a rest position and into a working position and, in a power-assisted return movement, out of the working position and into the rest position, **characterised in that**,
by means of the aforesaid manual operation, the return movement of the sawing unit (3) can be continued a small distance beyond the rest position, in an over-stroke, and the latching-in immobilisation can be set aside by the movement of the sawing unit (3) in said over-stroke.

2. Sawing device according to claim 1, **characterised in that**, for the purpose of bringing about the latching-in immobilisation, there is arranged on the adjusting mounting (7) a latching element (11), in particular a latching lever or latching bolt, which is spring-loaded in the latching-in direction and can be lifted out, against the spring loading, by means of the manual operation,
wherein there is preferably provided, between the sawing unit (3) and the latching element (1), a force-transmitting chain (12) which is operative at least in the rest position and in the over-stroke of the sawing unit (3).

3. Sawing device according to claim 1 or 2, **characterised in that** the adjusting mounting (7) is a swivel mounting by means of which the sawing unit (3) can be swivelled, in relation to the carrier (2), about a horizontal swivelling axis of inclination (13) which extends in the direction of sawing.

4. Sawing device according to one of claims 1 to 3, **characterised in that** the sawing unit (3) is arranged above the workpiece-supporting surface (1).

5. Sawing device according to claim 4, **characterised in that** the sawing unit (3) is swivellably mounted on the adjusting mounting (7) by means of a horizontal crosscutting swivel pin (14) which extends transversely to the direction of sawing,
wherein the working movement/return movement is preferably the swivelling movement about the crosscutting swivel pin (14).

6. Sawing device according to claim 4 or 5, **characterised in that** the sawing unit (3) is mounted on the adjusting mounting (7) so as to be displaceable in the direction of sawing by means of a cable-pull guide (15) which extends in said direction of sawing.

7. Sawing device according to claim 6, **characterised in that** the working movement/return movement is the movement of displacement by means of the cable-pull guide (15).

8. Sawing device according to claims 5 and 6, **characterised in that** the transmission of force from the sawing unit (3) to the latching element (11) in the over-stroke is guaranteed in every position of displacement of said sawing unit (3), wherein the force-transmitting chain (12) preferably has, for that purpose, a sliding link (16) arranged parallel to the cable-pull guide (15).

9. Sawing device according to one of claims 1 to 8, **characterised in that** the rest position of the sawing unit (3) is defined by a rest stop (19) which can be overridden or disengaged for the purpose of executing the over-stroke.

10. Sawing device according to claim 9, **characterised in that** the disengagement of the rest stop (19) takes place by a manual disengaging operation.

11. Sawing device according to claim 10, **characterised in that** an actuating element (20) for executing the disengaging operation is provided on the actuating handle (6) and is coupled to the rest stop (19) via an actuating connection (21).

12. Sawing device according to claim 11, **characterised in that** the actuating connection (21) is realised as a mechanical force-action chain, in particular as a linkage, a cable-pull mechanism or a Bowden-pull mechanism.

13. Sawing device according to claim 11, **characterised in that** the actuating connection (21) is realised as an electric, pneumatic or hydraulic control connection.

14. Sawing device according to one of claims 1 to 13, **characterised in that** the over-stroke is limited by a fixed over-stroke stop.

15. Sawing device according to one of claims 1 to 14, **characterised in that**, for the purpose of actuating the latching element (11), an electric, pneumatic or hydraulic control connection is provided instead of a mechanical force-transmitting chain (12).

## Revendications

1. Dispositif de sciage comportant un support (2) constitué d'une surface (1) pour poser une pièce à travailler et une unité de sciage (3) avec un moteur d'entraînement (4), une lame de scie (5) entraînée par le moteur d'entraînement (4) et une poignée de manipulation (6),
dans lequel l'unité de sciage (3) est couplée par crantage sur le support (2) au moyen d'une fixation réglable (7), dans sa position relative par rapport au support (2) et au moins dans une position définie et de préférence dans plusieurs positions définies,
dans lequel le couplage par crantage est déboîtable par une action manuelle, et dans lequel l'unité de sciage (3) est déplaçable par rapport à la fixation réglable (7) dans une position de travail, à partir d'une position de repos vers une position de travail et au cours d'un déplacement de retour assisté mécaniquement, hors d'une position de travail dans une position de repos,
**caractérisé en ce que**,
par ladite action manuelle, le déplacement de retour de l'unité de sciage (3) peut s'effectuer au-delà de la position de repos par un petit dépassement de la course, de telle manière que le déplacement de l'unité de sciage (3) en dépassement de course libère le couplage emboîté par crantage.

2. Dispositif de sciage selon la revendication 1, **caractérisé en ce que** pour la réalisation du couplage emboîtable sur la fixation réglable (7), il comporte un élément à crans (11), en particulier un levier à crans ou une cheville à crans, **en ce que** le couplage est sollicité par la force d'un ressort et que l'action manuelle s'effectue à l'encontre de la contrainte du ressort,
dans lequel, une chaîne de transmission de force (12), agissant au moins dans la position de repos, lors du dépassement de la course de l'unité de sciage (3) est de préférence prévue entre l'unité de sciage (3) et l'élément à crans (11).

3. Dispositif de sciage selon la revendication 1 ou 2, **caractérisé en ce que** la fixation réglable (7) est un organe de maintien pivotant, par lequel l'unité de sciage (3) bascule par rapport au support (2) autour d'un axe d'inclinaison et de pivotement (13) horizontal orienté selon la direction de sciage.

4. Dispositif de sciage selon l'une des revendications 1 à 3, **caractérisé en ce que** l'unité de sciage (3) est disposée au-dessus de la surface pour poser une pièce à travailler (1).

5. Dispositif de sciage selon la revendication 4, **caractérisé en ce que** l'unité de sciage (3) est montée pivotante sur la fixation réglable (7) au moyen d'un axe de pivotement (14) horizontal disposé transversalement par rapport à la direction de sciage,
dans lequel, le déplacement de travail/déplacement de retour du mouvement de pivotement s'effectue autour de l'axe de pivotement (14).

6. Dispositif de sciage selon la revendication 4 ou 5, **caractérisé en ce que** l'unité de sciage (3) est montée mobile sur la fixation réglable (7) au moyen d'un élément de traction (15) disposé selon la direction de sciage.

7. Dispositif de sciage selon la revendication 6, **caractérisé en ce que** le déplacement de travail/déplacement de retour du mouvement de coulissement est effectué au moyen de l'élément de traction (15).

8. Dispositif de sciage selon les revendications 5 et 6, **caractérisé en ce que** la transmission de force de l'unité de sciage (3) sur l'élément à crans (11) lors du dépassement de course est assurée dans chaque position décalée de l'unité de sciage (3),
dans lequel, la chaîne de transmission de force (12) comporte de préférence une coulisse de translation (16) parallèle au guide de traction (15).

9. Dispositif de sciage selon l'une des revendications 1 à 8, **caractérisé en ce que** la position de repos de l'unité de sciage (3) est définie par une butée de repos (19) qui peut être dépassée ou déconnectée pour permettre le dépassement de course.

10. Dispositif de sciage selon la revendication 9, **caractérisé en ce que** la déconnexion de la butée de repos (19) peut être effectuée par une action manuelle.

11. Dispositif de sciage selon la revendication 10, **caractérisé en ce que** la poignée de manipulation (6) comporte un élément d'actionnement (20) pour effectuer l'opération de déconnexion et est couplée à la butée de repos (19) au moyen d'un couplage d'actionnement (21).

12. Dispositif de sciage selon la revendication 11, **caractérisé en ce que** le couplage d'actionnement (21) est constitué d'une chaîne de transmission de force mécanique, en particulier d'une tringlerie, d'un mécanisme de traction par câble ou d'une mécanique de traction par Bowden.

13. Dispositif de sciage selon la revendication 11, **caractérisé en ce que** le couplage d'actionnement (21) est constitué d'une liaison à commande électrique, pneumatique ou hydraulique.

14. Dispositif de sciage selon l'une des revendications 1 à 13, **caractérisé en ce que** le dépassement de course est limité par une butée d'arrêt fixe.

15. Dispositif de sciage selon l'une des revendications 1 à 14, **caractérisée en ce que**, pour l'actionnement de l'élément à crans (11) une liaison de commande électrique, pneumatique ou hydraulique peut être prévue en remplacement d'un couplage mécanique par une chaîne de transmission (12) de force.
